Europäisches Patentamt

European Patent Office

Office européen des brevets

(11) Publication number: **0 417 915 A1**

# EUROPEAN PATENT APPLICATION

(21) Application number: 90308968.8

(22) Date of filing: 15.08.90

(51) Int. Cl.⁵: **A01K 97/06**

(30) Priority: 09.09.89 GB 8920440

(43) Date of publication of application:
20.03.91 Bulletin 91/12

(84) Designated Contracting States:
AT BE CH DE DK ES FR GB GR IT LI LU NL SE

(71) Applicant: **Fitton, Nicholas Vernon**
**12 Churchill Drive**
**Boston, Lincolnshire PE21 ONH(GB)**

Applicant: **Bowers, Edward Carryer**
**'Welldale', Acton**
**Newcastle-under-Lyme, Staffordshire ST5 4EG(GB)**

(72) Inventor: **Fitton, Nicholas Vernon**
**12 Churchill Drive**
**Boston, Lincolnshire, PE21 0NH(GB)**

(74) Representative: **Hands, Horace Geoffrey et al**
**LEWIS W. GOOLD & CO. Whitehall Chambers**
**23, Colmore Row**
**Birmingham B3 2BL(GB)**

(54) Angling accessory.

(57) A carrier for anglers' tangles comprises an area of material divided -into two parts by a hinge line, with male Velcro material on one part and female Velcro material on the other part so that the two areas can be adhered together to captive and retain anglers' tangles therebetween.

Xerox Copy Centre

## ANGLING ACCESSORY

This invention relates to an angler's accessory.

One of the problems faced by anglers is that of dealing with waste line, casts etc. This is often of nylon or of other like fine filamentary material which easily become tangled or unusable by the angler for other reasons. The simplest solution for the angler is to cutaway and discard the tangle, but the disposal of this is the problem. It is hazardous for example to farmstock, children, wildlife and so on and is usually not biodegradable.

According to one aspect of the invention we provide a method of disposing of anglers tangles which comprise providing an area of the male hooked material which is sold under the Registered Trade Mark "VELCRO", or of like material (if such exists) and pressing the tangle onto said area so as to engage and retain the tangle thereon.

Preferably the method includes the use of two like size areas of Velcro RTM material namely one of said male areas and one of the looped felt-like or female material areas of the Velcro which are subsequently (releasably) engaged together to trap the tangle therebetween. The two areas may constitute a pouch-like container or may be facing walls of a garment pocket or the exterior of a pocket and a flap closure therefor.

The method enables the tangle to be dealt with on site, that is where the angler is located when the tangle occurs. At a later time and another place the tangle can be removed from the material for disposal as by burning or by a Municipal rubbish (trash) collection service, or possibly it can be untangled for reuse

The invention also consists in a carrier for anglers tangles comprising a pouch-like member provided with said material (Velcro, RTM, or equivalent if any) on two faces adapted to be brought together and engaged, with the tangle therebetween. The two faces may be hinged together, or may be spaced areas of a cloth backing which can be folded between the spaced areas. Edges of the areas could be provided with a suitable fastener to close and secure the pouch, which may be found advantageous if a particularly large mass is to be secured, but for smaller quantities as in normal use by one angler, this may be thought to be an unnecessary complication.

The carrier may be pocket sized, or wallet (pocket book) size, that is of the order of 10-15cm long and rather less wide.

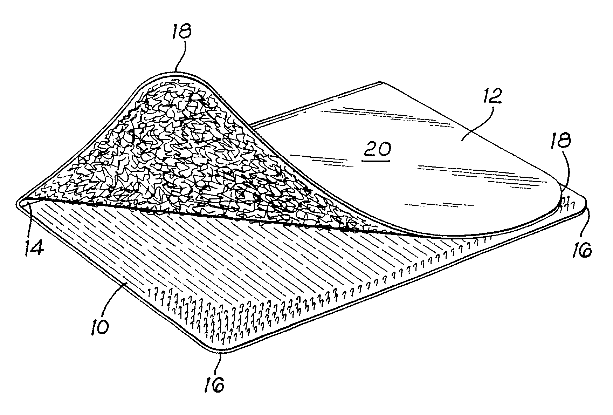

One embodiment of the invention is now more particularly described with reference to the accompanying drawing wherein the sole figure is a perspective view of an angler's tangle receptacle in a position for use.

The receptacle in the drawing comprises a single sheet of flexible material for example a plastics or possibly leather or a leather simulated material. This is generally rectangular and provides a first half portion 10 and a second half portion 12 connected by a hinge line 14. It is not necessary to provide any hinge structure, as, the flexibility of the material will usually be sufficient. One of the areas for example 10 has corners 16 of smaller radius than the corners 10 of the other area 12, so that when superimposed one of the thicknesses of material is exposed to facilitate separation of the two layers which may then be adhered together.

Area 10 is covered with the male Velcro (RTM) material and area 12 with the female material, or vice versa. A narrow area along the hinge line bears neither kind, and this facilitates folding along that line.

then closed together as in the vicinity of the area 20 in the drawing, the two areas effectively adhere together and can trap line tangles located therebetween. Such tangles may instead be effectively adhered to at least the male area alone but the security is improved if the two areas are closed together and this also prevents unwanted material adhering to the Velcro.

The closed tangle-containing receptacle can then be placed safely in a user's pocket or otherwise stowed away with the user's angling kit for subsequent destruction or recycling of the tangle as referred to above. The springy and slippery lightweight tangle which is otherwise very easily inadvertently dropped from a pocket or the like is thus retained ash step in a reliable and proper disposal procedure.

## Claims

1. A method of disposing of anglers' tangles comprising providing an area of the male hooked material which is sold under the Registered Trade Mark "VELCRO", or of like material (if such exists) and pressing the tangle onto said area so as to engage and retain the tangle thereon.

2. A method as claimed in Claim 1 including the use of two like size areas of said Velcro or like namely one of said male areas and one of the loop, felt-like or female material areas of the Velcro so that tangles can be trapped between two engaged areas.

3. A carrier for anglers' tangles comprising a generally planar member provided with female Velcro material over part of its surface and male Velcro material over another part of its surface with a hinge line therebetween.

4. A carrier as claimed in Claim 3 wherein the carrier provides a pocket or pouch.

European
Patent Office

**EUROPEAN SEARCH
REPORT**

Application Number

**EP 90 30 8968**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 510 869   (BUREL)<br>* the whole document *<br>— — — | 1,2,3 | A 01 K 97/06 |
| X | GB-A-1 288 844   (CRANSTON)<br>* the whole document *<br>— — — | 1,2,3,4 | |
| X | US-A-3 940 873   (LAWLESS)<br>* the whole document *<br>— — — — — | 1,2,3,4 | |

| | |
|---|---|
| | TECHNICAL FIELDS SEARCHED (Int. Cl.5) |
| | A 01 K |

The present search report has been drawn up for all claims

| Place of search | Date of completion of search | Examiner |
|---|---|---|
| The Hague | 07 December 90 | VERDOODT S.J.M. |